# EUROPEAN PATENT SPECIFICATION

(11) **EP 2 199 218 B1**
(45) Date of publication and mention of the grant of the patent: **18.04.2012**
(21) Application number: 08837285.9
(22) Date of filing: 17.09.2008
(51) Int. Cl.: B65B 9/20, B65B 51/30, B65B 57/00, B29C 65/00, B29C 65/18, B29C 65/30, H02P 3/06

(54) **BAG MAKING AND PACKAGING MACHINE**
BEUTELHERSTELLUNGS- UND VERPACKUNGSMASCHINE
MACHINE DE FABRICATION DE SAC ET D'EMBALLAGE

(30) Priority: 10.10.2007 JP 2007264550
(43) Date of publication of application: 23.06.2010
(73) Proprietor: Ishida Co., Ltd., Sakyo-ku Kyoto-shi Kyoto 606-8392 (JP)
(72) Inventor: MIYAMOTO, Hideshi, Ritto-shi Shiga 520-3026 (JP); YOSHIKAWA, Takao, Ritto-shi Shiga 520-3026 (JP)
(74) Representative: Skone James, Robert Edmund
(86) International application number: PCT/JP2008/066738
(87) International publication number: WO 2009/047967

(56) References cited:
- JP-A- 61 132 319
- JP-A- 2004 155 465
- US-A- 1 901 685
- US-A- 3 643 144

## Description

### Technical Field

The present invention relates to a bag making and packaging machine making a bag and packaging a product using this bag.

### Background Art

Various technologies relating to a bag making and packaging machine have been conventionally proposed. For instance, the technology of Patent Document 1 is aimed at reducing power load of a driver by operating the driver so as not to overlap conducting periods of a heater and a motor. Also, Patent Document 2 discloses the technology relating to a bag making and packaging machine.

Patent Document 1: Japanese Patent Application Laid-Open No. 2004-155465
Patent Document 2: Japanese Patent Application Laid-Open No. 2007-84082

In the technology of the aforementioned Patent Document 1, the conducting periods of the heater and the motor are simply staggered, so that consumption current at a certain moment is reduced, but total consumption current is not reduced.

### Disclosure of Invention

The present invention has been made in view of the above, and an object thereof is to provide a technology capable of reducing consumption current of a bag making and packaging machine.

In order to solve the above problem, according to the present invention, a bag making and packaging machine making a bag and packaging a product using this bag, includes the features according to claim 1.

According to a preferred embodiment of the present invention, when the regenerative current is supplied to the heater part, the heater driving part reduces a current applied to this heater part.

According to the bag making and packaging machine of the present invention, the sealing mechanism is heated using the regenerative current generated in the motor as well as with the heater driving part, thereby reducing the consumption current of the bag making and packaging machine.

Particularly, according to the preferred embodiment, the sealing mechanism is efficiently heated.

These and other objects, features, aspects and advantages of the present invention will become more apparent from the following detailed description of the present invention when taken in conjunction with the accompanying drawings.

### Brief Description of Drawings

[FIG. 1] is a side view showing a mechanical configuration of a bag making and packaging machine according to a preferred embodiment of the present invention.
[FIG. 2] is a side view showing a mechanical configuration of a lateral sealer according to the preferred embodiment of the present invention.
[FIG. 3] is a block diagram mainly showing an electrical configuration of the bag making and packaging machine according to the preferred embodiment of the present invention.
[FIG. 4] is a view showing a configuration bf a heater part according to the preferred embodiment of the present invention.
[FIG. 5] is a view showing a driving method of the heater part according to the preferred embodiment of the present invention.

### Best Mode for Carrying Out the Invention

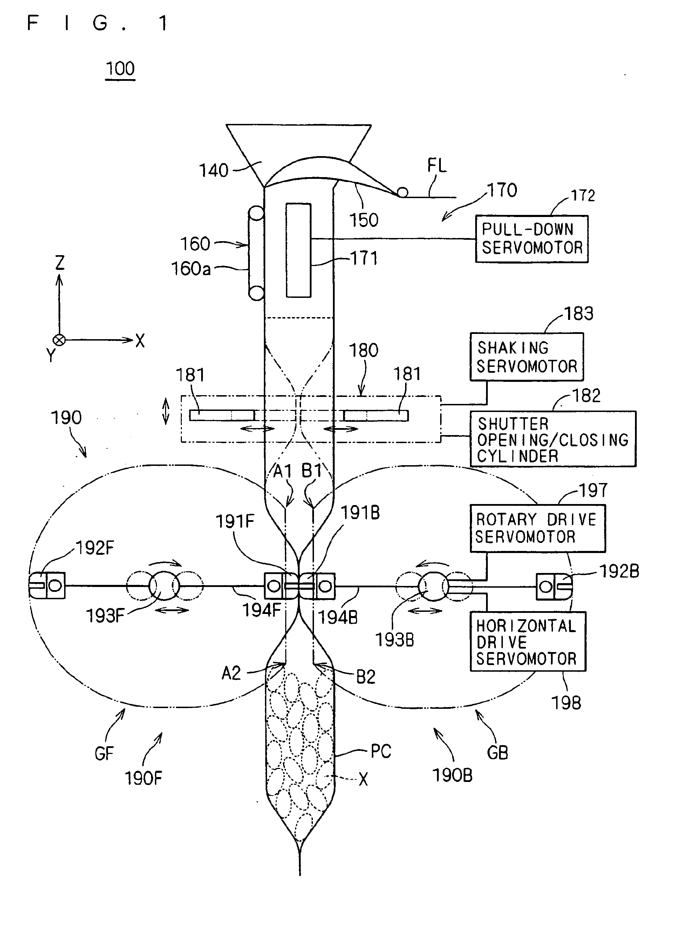

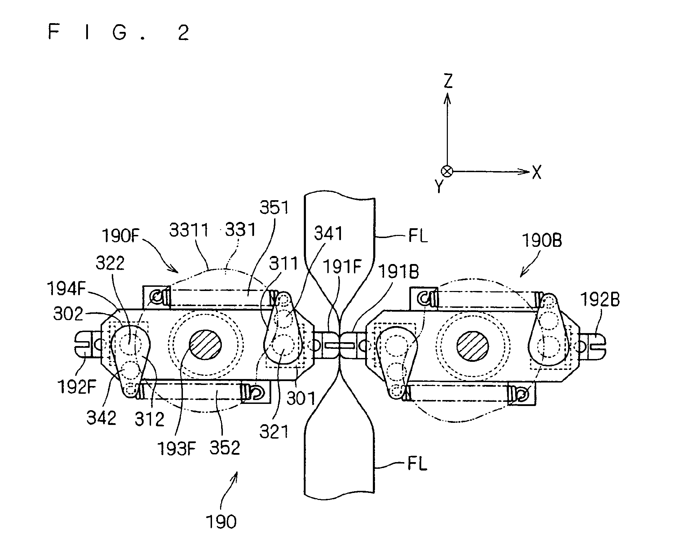

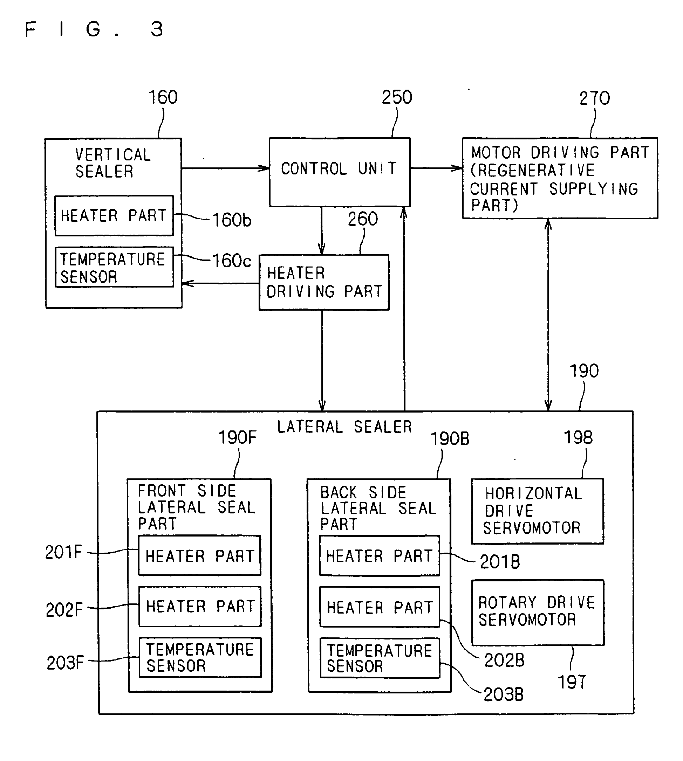

FIG. 1 is a side view showing a mechanical configuration of a bag making and packaging machine 100 according to a preferred embodiment of the present invention. FIG. 2 is a side view showing a mechanical configuration of a lateral sealer 190 included in the bag making and packaging machine 100 in details. FIG. 3 is a block diagram mainly showing an electrical configuration of the bag making and packaging machine 100. The bag making and packaging machine 100 is a vertical bag making and packaging machine making a bag PC and packaging products X using the bag PC. The description below employs a XYZ rectangular coordinate system with a front-to-back direction, horizontal direction, and vertical direction of the bag making and packaging machine 100 as an X-axis direction, Y-axis direction, and Z-axis direction, respectively.

As shown in FIG. 1, the bag making and packaging machine 100 according to the present preferred embodiment is provided with a tube 140 catching supplied products X and guiding them downward, and a former 150 shaping an elongated film FL to be packaging material into tube-shaped.

The tube 140 is funnel-shaped in its upper part, and cylindrical in its lower part. The funnel-shaped upper part of the tube 140 functions as a collection chute catching the supplied products X and guiding them into the tube 140. The tube 140 guides the products X inside and the tube-like film FL wrapped around the external surface to downward.

The former 150 includes a curved surface into which the tube 140 penetrates, and a space through which the supplied film FL is passed, is provided between that curved surface and the tube 140. The former 150 wraps the film FL formed into tube-shaped around the external surface of the tube 140 by closely attaching the supplied film FL to the curved surface and then passing the film FL through the space.

The bag making and packaging machine 100 is provided with a vertical sealer 160 sealing (depositing) an overlapping part extending to a vertical direction (longitudinal direction) of the tube-like film FL wrapped around the tube 140, and a pull-down device 170 transferring the tube-like film FL downward. The pull-down device 170 includes a pair of pull-down belts 171 (only one of them is shown in Figure) disposed at both sides of the tube 140, and a pull-down servomotor 172 driving the pull-down belts 171. The pair of pull-down belts 171 is driven by the pull-down servomotor 172 to transfer the film FL downward, suctioning the tube-like film FL from both sides with a vacuum pump not shown.

The vertical sealer 160 includes a belt member 160a sandwiching the film FL with the tube 140 as well as running to follow the transfer of the film FL. As shown in FIG. 3, the vertical sealer further includes a heater part 160b heating the belt member 160a so as to seal the overlapping part of the film FL, and a temperature sensor 160c measuring temperature of the belt member 160a. The temperature sensor 160c is composed of, e.g. a thermocouple and the like.

A shaking device 180 enhancing bulk density of the products X supplied to inside the tube-like film FL is disposed below the vertical sealer 160 and the pull-down device 170. A lateral sealer 190 sealing the upper end portion of the tube-like film FL containing the products X to make a bag PC as well as sandwiching the tube-like film FL from both sides of front and back to seal a predetermined position of the film FL, is disposed below the shaking device 180.

The shaking device 180 enhances the bulk density of the products X by shaking a pair of front and back shutter members 181 up and down in a state where the tube-like film FL ,which includes a bottom part formed with the lateral sealer 190 and is supplied with the products X, is sandwiched with those shutter members 181. The shaking device 180 is provided with a shutter opening/closing cylinder 182 opening or closing the pair of shutter members 181, and a shaking servomotor 183 shaking the pair of shutter members 181 up and down. In FIG. 1, a state where the tube-like film FL is not sandwiched with the shutter members 181 is shown in a solid line, and a state where the tube-like film FL is sandwiched with the shutter members 181 is shown in a two-dot chain line.

The lateral sealer 190 includes a pair of front and back lateral seal parts 190F, 190B, and the tube-like film FL is sealed and cut in a lateral direction (cross direction) by operating the lateral seal parts 190F and 190B in cooperation with each other.

The lateral seal part 190F of the front side (hereinafter, referred to as a "front side lateral seal part 190F") includes seal jaws 191F, 192F, a rotation axis 193F reciprocating linearly back and forth as well as rotating clockwise, and a connecting member 194F connecting the seal jaws 191F, 192F, and the rotation axis 193F. A lateral seal part 190B of the back side (hereinafter, referred to as a "back side lateral seal part 190B") includes seal jaws 191B, 192B, a rotation axis 193B reciprocating linearly back and forth as well as rotating counterclockwise, and a connecting member 194B connecting the seal jaws 191B, 192B, and the rotation axis 193B.

Further, the lateral sealer 190 is provided with a rotary drive servomotor 197 rotating the rotation axis 193B counterclockwise as well as rotating the rotation axis 193F clockwise. The lateral sealer 190 is also provided with a horizontal drive servomotor 198 reciprocating the rotation axes 193B, 193F linearly and independently in a horizontal direction (X axis direction) perpendicular to a direction of transferring the film FL (Z axis direction).

### <Detail Configuration of Lateral Sealer>

Next, a configuration of the lateral sealer 190 will be described in detail. In the present preferred embodiment, the front side lateral seal part 190F and the back side lateral seal part 190B have the identical configuration of back and forth symmetry, so that the configuration of the front side lateral seal part 190F will be mainly described hereinafter.

As shown in FIG. 2, the front side lateral seal part 190F includes the connecting member 194F, the seal jaws 191F, 192F, base members 301, 302, pivot members 311, 312, and pivot axes 321, 322.

The connecting member 194F moves to follow the reciprocating linear motion of the rotation axis 193F, and also moves to follow the rotational motion of the rotation axis 193F.

The seal jaws 191F, 192F at both sides of the connecting member 194F sandwich the tube-like film FL in pairs with the seal jaws 191B, 192B, respectively, sealing (depositing) and cutting the sandwiched tube-like film FL. Heater parts 201F, 202F are provided inside the seal jaws 191F, 192F, respectively, in order to deposit the tube-like film FL (see FIG. 3). The seal jaws 191F, 192F to be the sealing mechanism are heated with the heater parts 201F, 202F, respectively. A temperature sensor 203F is built in either one of the seal jaws 191 F, 192F and measures a temperature of the either one of them (see FIG. 3).

Heater parts 201B, 202B are provided inside the seal jaws 191B, 192B of the back side lateral seal part 190B, respectively, and a temperature sensor 203B is built in either one of the seal jaws 191 B, 192B so as to measure a temperature of the either one of them (see FIG. 3). The temperature sensors 203B, 203F are composed of, e.g. a thermocouple and the like.

A cutter (not shown) driven by a solenoid and the like to cut a part of the film FL sealed in the lateral direction, is placed in each of the seal jaws 191F, 192F of the front side lateral seal part 190F, or in each of the seal jaws 191 B, 192B of the back side lateral seal part 190B.

The base members 301, 302 hold the seal jaws 191F, 192F, respectively. The base members 301, 302 are coupled to the pivot axes 321, 322, respectively, and are capable of pivoting around the pivot axes 321, 322 relatively to the connecting member 194F.

The pivot members 311, 312 are coupled to the pivot axes 321, 322, in the vicinity of one end, respectively, and are capable of pivoting around the pivot axes 321, 322 relatively to the connecting member 194F.

The pivot axes 321, 322 are provided so as to penetrate the connecting member 194F laterally (Y-axis direction) in both ends of the connecting member 194F. The pivot axes 321, 322 are capable of pivoting relatively to the connecting member 194F.

Thereby, in the front side lateral seal part 190F, if the pivot members 311, 312 pivot relatively to the connecting member 194F, the base members 301, 302 pivot relatively to the connecting member 194F, and the angles of the seal jaws 191F, 192F to the connecting member 194F are to be changed.

The front side lateral seal part 190F further includes a cam 331, cam followers 341, 342, and springs 351, 352. While the cam 331 moves to follow the reciprocating linear motion of the rotation axis 193F, it is placed not to follow the rotational motion of the rotation axis 193F. Thus, even when the rotation axis 193F rotates, the cam 331 does not rotate. The cam followers 341, 342 are attached to the pivot members 311, 312, respectively, to be rotatable, and slidably contact with a cam surface 3311 of the cam 331. The cam followers 341, 342 are attached at the position closer to the other end of the pivot members 311, 312 than the coupling position to the pivot axes 321, 322.

The springs 351, 352 are provided at a side part of the connecting member 194F. The spring 351 is disposed over the other end portion of the pivot member 311 to the end portion of the connecting member 194F at the opposite side from the end portion in which the pivot member 311 is provided, across the rotation axis 193F, and the cam follower 341 is biased toward the cam surface 3311 by the spring 351. Similarly, the spring 352 is provided over the other end portion of the pivot member 312 to the end portion of the connecting member 194F at the opposite side from the end portion in which the pivot member 312 is provided, across the rotation axis 193F, the cam follower 342 is biased toward the cam surface 3311 by the spring 352. Thereby, the configuration of the cam surface 3311 defines the orientations of the seal jaws 191F, 192F to the connecting member 194F.

### <Electrical Configuration of Bag Making and Packaging Machine>

Next, referring to FIG. 3, an electrical configuration of the bag making and packaging machine 100 will be described in detail. As shown in FIG. 3, the bag making and packaging machine 100 is provided with a control unit 250 functioning as a control part controlling the entire operation of the bag making and packaging machine 100. The control unit 250 is composed of a CPU, memory and the like.

The bag making and packaging machine 100 is also provided with a heater driving part 260 and a motor driving part 270. The heater driving part 260 drives the heater part 160b of the vertical sealer 160 and the heater parts 201 B, 202B and the heater parts 201F, 202F of the lateral sealer 190 by the control of the control unit 250. The control unit 250 controls the heater driving part 260 on the basis of the detection result of the temperature sensor 160c of the vertical sealer 160. Thereby, the heater part 160b is driven so as to set the temperature of the belt member 160a of the vertical sealer 160 to be constant.

Similarly, the control unit 250 controls the heater driving part 260 on the basis of the detection result of the temperature sensor 203F of the front side lateral seal part 190F. Thereby, each of the heater parts 201F, 202F is driven by the heater driving part 260 so as to set the temperature of the seal jaws 191F, 192F of the front side lateral seal part 190F to be constant.

Similarly, the control unit 250 controls the heater driving part 260 on the basis of the detection result of the temperature sensor 203B of the back side lateral seal part 190B. Thereby, each of the heater parts 201B, 202B is driven by the heater driving part 260 so as to set the temperature of the seal jaws 191B, 192B of the back side lateral seal part 190B to be constant.

The motor driving part 270 is composed of a MOS transistor, diode and the like, driving the rotary drive servomotor 197 and the horizontal drive servomotor 198 of the lateral sealer 190 by the control of the control unit 250. The motor driving part 270 also drives the pull-down servomotor 172 and the shaking servomotor 183 described above.

### <Motion Trajectory of Seal Jaw>

Next, referring to FIG. 1, motion trajectory of the seal jaws 191F, 192F, and the seal jaws 191B, 192B will be described.

As shown in FIG. 1, each of the seal jaws 191F, 192F is driven by the rotary drive servomotor 197 and the horizontal drive servomotor 198 so as to repeatedly draw a trajectory GF closed in a substantially D-shape made of a straight section from a position A1 to a position A2 and a curving section including an arc from the position A2 to the position A1 in a side view. Each of the seal jaws 191B, 192B is driven by the rotary drive servomotor 197 and the horizontal drive servomotor 198 so as to repeatedly draw a trajectory GB closed in a substantially D-shape made of a straight section from a position B1 to a position B2 and a curving section including an arc from the position B2 to the position B1 in a side view.

The pair of the seal jaws 191 B, 191 F located to be symmetric back and forth to the tube-like film FL, moves to follow the tube-like film FL by being driven with the rotary drive servomotor 197 and the horizontal drive servomotor 198 when the seal jaw 191F is in the straight section of the trajectory GF and the seal jaw 191B is in the straight section of the trajectory GB, cutting the tube-like film FL as well as sandwiching the tube-like film FL from both sides of back and forth so as to seal the tube-like film FL in a cross direction. In contrast, the pair of the seal jaws 191 B, 191 F moves to be separated from the tube-like film FL when the seal jaw 191F is in the curving section of the trajectory GF and the seal jaw GB is in the curving section of the trajectory GB. The pair of the seal jaws 192B, 192F moves similarly, cutting the tube-like film FL as well as sandwiching the tube-like film FL from the both sides of back and forth so as to seal in the cross section.

The shape of the cam surface 3311 of the cam 331 is determined such that the pair of the seal jaws 191B, 191F, or the pair of the seal jaws 192B, 192F appropriately sandwiches the tube-like film FL, opposing to each other, when moving linearly to the Z-axis direction.

### <Packaging Operation of Bag Making and Packaging Machine>

Next, the packaging operation of the bag making and packaging machine 100 according to the present preferred embodiment will be described. First, the band-like film FL is wrapped around the tube 140 through the forming tube 150 to be formed into tube-shaped, being transferred to downward by the pull-down device 170. Then, the overlapping part of the tube-like film FL is sealed with the vertical sealer 160. At this time, when the products X of a predetermined weight are supplied into the tube-like film FL, in which a bottom part is formed, from a device such as a weighing machine through the tube 140, an upside of the film FL where the products X are supplied is sealed to form a new bottom part of the tube-like film FL as well as the bag PC in which the products X are contained. Then, a substantially central part of the part of the film FL sealed in the cross section is cut and the bag PC is separated from the film FL. Thereafter, the same operation is repeated. Thereby, packed products are sequentially manufactured.

### <Driving Method of Heater Part>

Next, the configuration and the driving method of the heater part 160b of the vertical sealer 160, the heater parts 201B, 202B, and the heater parts 201F, 202F of the lateral sealer 190 will be described in detail. In the present preferred embodiment, the heater part 160b, the heater parts 201B, 202B, and the heater parts 201F, 202F have the same configuration and are driven by the same method, so that the configuration of the heater part 201F and the driving method thereof will be described in detail on behalf of the heater parts, hereinafter.

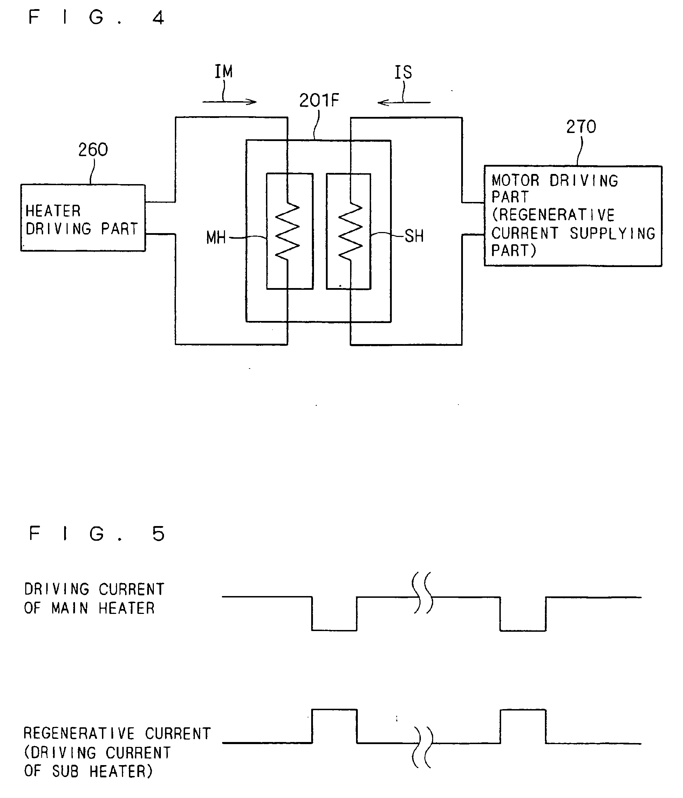

FIG. 4 is a view showing the configuration of the heater part 201F. As shown in FIG. 4, the heater part 201F is composed of a main heater MH and a sub heater SH, which are driven to be independent from each other. The main heater MH is applied with a driving current IM by the heater driving part 260, and the sub heater SH is applied with a driving current IS by the motor driving part 270.

Here, as described above, each of the rotation axis 193F changing the positions of the seal jaws 191F, 192F and the rotation axis 193B changing the positions of the seal jaws 191B, 192B reciprocates linearly back and forth by being driven with the horizontal drive servomotor 198. Immediately before the moving direction of the rotation axes 193B, 193F changes from a - X direction to a + X direction, or from a + X direction to a - X direction, the rotation of the horizontal drive servomotor 198 slows down. In general, when the break is applied to the rotation of the motor and the rotation speed is decreased, regenerative current is generated by energy accumulated in a coil of the motor. The motor driving part 270 according to the present preferred embodiment extracts the regenerative current generated in the horizontal drive servomotor 198 to outside through a diode included in the motor driving part 270 itself and the like, and the extracted regenerative current is supplied to the sub heater SH as the driving current IS. That is, the motor driving part 270 functions as a regenerative current supplying part supplying the regenerative current generated in the horizontal drive servomotor 198 to the heater part 201 F.

FIG. 5 is a view showing the driving method of the main heater MF and the sub heater SH. The heater driving part 260 supplies the driving current IM to the main heater MH so as to set the temperature of the seal jaw 191 F to be constant on the basis of the detection result of the temperature sensor 203F, as described above, when the regenerative current is not generated in the horizontal drive servomotor 198. As shown in FIG. 5, when the line current is generated in the horizontal drive servomotor 198 to output the driving current IS from the motor driving part 270, the heater driving part 260 reduces the driving current IM applied in the main heater MH by the amount of the regenerative current while the regenerative current is being generated.

Here, the control unit 250 controls the horizontal drive servomotor 198 through the motor driving part 270, thereby specifying the timing that the regenerative current is generated in the horizontal drive servomotor 198 and the timing that the regenerative current is not generated in the horizontal drive servomotor 198. The value of the regenerative current generated in the horizontal drive servomotor 198 is obtained by conducting the experimental tests and the like in advance and previously stored in the control unit 250. The control unit 250 controls the heater driving part 260 so as to reduce the driving current IM supplied to the main heater MH by the amount of the regenerative current at the timing that the regenerative current is generated in the horizontal drive servomotor 198. Then, the control unit 250 controls the heater driving part 260 such that the driving current IM supplied to the main heater MH is increased to return to its original state at the timing that the regenerative current is not generated in the horizontal drive servomotor 198. Thereby, the driving current IM supplied from the heater driving part 260 to the heater part 201F is reduced, while the regenerative current (driving current IS) is supplied to the heater part 201F.

Each of the heater part 160b, the heater parts 201B, 202B, and the heater part 202F includes the main heater MH and the sub heater SH, and similarly to the heater 201F, the driving current IM is supplied to the main heater MH from the heater driving part 260, and the regenerative current is supplied to the sub heater SH from the motor driving part 270.

As described above, in the present preferred embodiment, the sealing mechanism such as the belt member 160a of the vertical sealer 160 and the seal jaws 191F, 192F, and the seal jaws 191B, 192B of the lateral sealer 190 is heated not only by the heater driving part 260 but using the regenerative current generated in the horizontal drive servomotor 198, so that the consumption current of the bag making and packaging machine 100 is reduced.

When the regenerative current is supplied to the heater parts such as the heater part 160b and the heater part 201F, the heater driving part 260 reduces a current applied to those heater parts so that the sealing mechanism is efficiently heated.

In the present preferred embodiment, while the regenerative current is supplied to all the heater parts included in the bag making and packaging machine 100, the consumption current of the bag making and packaging machine 100 is reduced even by supplying the regenerative current to only some of them.

In the present preferred embodiment, while the regenerative current generated in the horizontal drive servomotor 198 is used when the belt member 160a, the seal jaws 191F, 192F and the seal jaws 191B, 192B are heated, that regenerative current may be used when the regenerative current is generated in another motor.

While the invention has been shown and described in detail, the foregoing description is in all aspects illustrative and not restrictive. It is therefore understood that numerous modifications and variations can be devised without departing from the scope of the invention.

## Claims

1. A bag making and packaging machine making a bag (PC) and packaging a product (X) using this bag, comprising:
a vertical sealing mechanism (160a) vertically sealing packaging material (FL);
a lateral sealing mechanism (191B, 191F, 192B, 192F) laterally sealing said packaging material (FL);
a heater part (160b, 201B, 201F, 202B, 202F) heating said vertical sealing mechanism and said lateral sealing mechanism;
a heater driving part (260) driving said heater part;
a motor (198) for reciprocating the position of said lateral sealing mechanism back and forth; and
a regenerative current supplying part (270) supplying a regenerative current (IS) generated in said motor to said heater part, said regenerative current being generated by slowing down of the rotation of said motor immediately before the position of said lateral sealing mechanism changes from front to back or from back to front.

2. The bag making and packaging machine according to claim 1,
wherein when said regenerative current is supplied to said heater part, said heater driving part reduces a current (IM) applied to this heater part, as compared with a current applied to said heater part when said regenerative current is not supplied to said heater part.

## Patentansprüche

1. Eine Beutelherstellungs-, und Verpackungsmaschine, welche einen Beutel (PC) herstellt und ein Produkt (X) in diesem Beutel verpackt, umfassend:
einen vertikalen Dichtungsmechanismus (160a), der das Verpackungsmaterial (FL) vertikal abdichtet;
einen lateralen Dichtungsmechanismus (191 B, 191 F, 192B, 191 F), der das Verpackungsmaterial (FL) lateral abdichtet;
ein Heizelement (160b, 201 B, 201 F, 202B, 202F), das den genannten vertikalen Abdichtungsmechanismus und den genannten lateralen Abdichtungsmechanismus aufheizt;
ein Heizelementantriebsteil (260), das das Heizelement antreibt;
einen Motor (198) für die Hin- und Herbewegung der Position des genannten lateralen Abdichtungsmechanismus und
ein regeneratives Stromzufuhrelement (270), das einen regenerativen Strom (IS), der in dem genannten Motor erzeugt wird, zu dem genannten Heizelement zuführt und der genannte regenerative Strom durch die Verlangsamung der Rotation des genannten Motors unmittelbar bevor die Position des genannten lateralen Abdichtungsmechanismus von vorne nach hinten oder von hinten nach vorne wechselt generiert wird.

2. Die Beutelherstellungs- und Verpackungsmaschine nach Anspruch 1, **dadurch gekennzeichnet, dass**
wenn der genannte regenerative Strom zu dem genannten Heizelement zugeführt wird, das genannte Heizelementantriebsteil einen Strom (IM), der zu diesem Heizelement zugeführt ist, im Vergleich zu einem dem genannten Heizelement zugeführten Strom, wenn der genannte regenerative Strom nicht zu dem genannten Heizelement zugeführt wird, reduziert.

## Revendications

1. Machine de fabrication de sachets et de conditionnement qui fabrique un sachet (PC) et conditionne un produit (X) au moyen de ce sachet, comprenant :
un mécanisme de scellage vertical (160a) qui scelle verticalement un matériau de conditionnement (FL) ;
un mécanisme de scellage latéral (191 B, 191 F, 192B, 192F) qui scelle latéralement ledit matériau de conditionnement (FL) ;
une pièce de chauffage (160b, 201 B, 201 F, 202B, 202F) qui chauffe ledit mécanisme de scellage vertical et ledit mécanisme de scellage latéral ;
une pièce d'entraînement de chauffage (260) qui entraîne laite pièce de chauffage ;
un moteur (198) pour déplacer réciproquement d'avant en arrière la position dudit mécanisme de scellage latéral ; et
une pièce de fourniture de courant régénératif (270) qui fournit un courant régénératif (IS) généré dans ledit moteur à ladite pièce de chauffage, ledit courant régénératif étant généré en ralentissant la rotation du moteur immédiatement avant que la position dudit mécanisme de scellage latéral ne change de l'avant vers l'arrière ou de l'arrière vers l'avant.

2. Machine de fabrication de sachets et de conditionnement selon la revendication 1,
dans laquelle quand ledit courant régénératif est fourni à ladite pièce de chauffage, ladite pièce d'entraînement de chauffage réduit un courant (IM) appliqué à cette pièce de chauffage, en comparaison à un courant appliqué à ladite pièce de chauffage quand ledit courant régénératif n'est pas fourni à ladite pièce de chauffage.
